# EUROPEAN PATENT APPLICATION

(11) **EP 4 626 097 A1**
(43) Date of publication of application: **01.10.2025**
(21) Application number: 23895001.8
(22) Date of filing: 21.11.2023
(51) Int. Cl.: H04W 64/00, H04W 24/08, H04W 4/40, G01S 5/18

(54) **METHOD FOR MEASURING LOCATION IN WIRELESS COMMUNICATION SYSTEM AND APPARATUS THEREFOR**

(30) Priority: 21.11.2022 KR 20220156786
(71) Applicant: LG Electronics Inc., Yeongdeungpo-gu Seoul 07336 (KR)
(72) Inventor: HWANG, Jaeho, Seoul 06772 (KR); KIM, Hakseong, Seoul 06772 (KR); SHIN, Dongsoo, Seoul 06772 (KR); SEO, Hanbyul, Seoul 06772 (KR); KIM, Donggeun, Seoul 06772 (KR)
(74) Representative: Mooser, Sebastian Thomas
(86) International application number: PCT/KR2023/018801
(87) International publication number: WO 2024/112073

(57) **Abstract**

An apparatus in a wireless communication system according to various embodiments: receives configuration information including information regarding an activation type related to location measurement based on a sound wave signal; activates, on the basis of the configuration information, a sound wave sensor for reception of the sound wave signal; and measures a location on the basis of sound wave signals received by the sound wave sensor, wherein the sound wave sensor may be activated on the basis of at least one parameter, which is determined on the basis of the activation type, from among a plurality of parameters included in the configuration information.

## Description

### TECHNICAL FIELD

The present disclosure relates to a method and apparatus for measuring a location based on acoustic signals in a wireless communication system.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

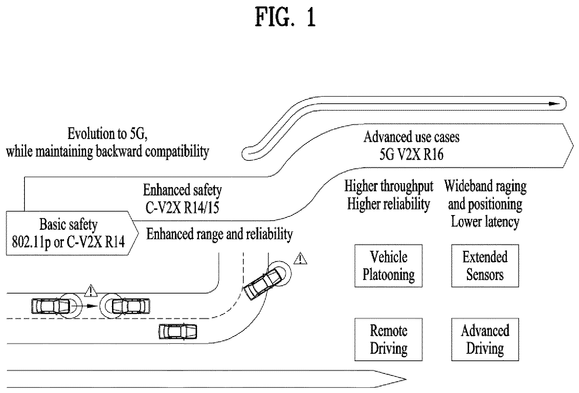

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

### DISCLOSURE

### TECHNICAL PROBLEM

An object of the present disclosure is to provide a method for measuring/determining the location of a device more accurately and more efficiently through acoustic signals.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### TECHNICAL SOLUTION

According to an aspect, a method for measuring a location by a device in a wireless communication system may include receiving configuration information including information about an activation type related to acoustic signal-based location measurement, activating an acoustic sensor for receiving an acoustic signal based on the configuration information, and measuring the location based on the acoustic signal received by the acoustic sensor. The acoustic sensor may be activated based on at least one parameter determined based on the activation type among a plurality of parameters included in the configuration information.

Alternatively, based on the configuration information indicating a second activation type, the device may determine a zone identifier (ID) and a zone level as the at least one parameter among the plurality of parameters, and the acoustic sensor may be activated based on the device entering at least one zone specified based on the zone ID and the zone level.

Alternatively, based on the zone level being a first level, the at least one zone may be specified as only a first zone corresponding to the zone ID, and based on the zone level being a second level, the at least one zone may be specified to include the first zone corresponding to the zone ID and a second zone adjacent to the first zone.

Alternatively, based on the configuration information indicating a second activation type, the device may determine a reference location and coverage for specifying a service area as the at least one parameter among the plurality of parameters, and the acoustic sensor may be activated based on the device entering the specified service area.

Alternatively, based on the configuration information indicating a third activation type, the device may determine a transmission period of an anchor node transmitting the acoustic signal as the at least one parameter among the plurality of parameters, and the acoustic sensor may be activated during a monitoring time interval determined based on the transmission period.

Alternatively, the acoustic sensor may be deactivated based on not receiving an activation signal equal to or greater than a specific threshold within the monitoring time interval.

Alternatively, based on the configuration information indicating a second activation type and a third activation type, the device may determine a reference location and coverage for specifying a service area, and a transmission period of an anchor node, as the at least one parameter among the plurality of parameters.

Alternatively, based on the device entering the service area, the acoustic sensor may be activated during a monitoring time interval determined based on the transmission period.

According to another aspect, a computer-readable recording medium storing a program for performing the above method of measuring a location may be provided.

According to another aspect, a device for performing the above method of measuring a location may be provided.

According to another aspect, a processing device for controlling a device performing the above method of measuring a location may be provided.

According to another aspect, a method for receiving location information from a device by a network in a wireless communication system may include transmitting configuration information including information about an activation type related to acoustic signal-based location measurement to the device, and receiving the location information measured based on the configuration information from the device. The configuration information may include a plurality of parameters related to activation of an acoustic sensor of the device, and the activation type may specify at least one parameter to be applied for the activation of the acoustic sensor in the device among the plurality of parameters.

### ADVANTAGEOUS EFFECTS

According to an embodiment of the present disclosure, the location of a device may be measured/determined more accurately and more efficiently through acoustic signals in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the present disclosure and are incorporated in and constitute a part of this application, illustrate embodiments of the present disclosure and together with the description serve to explain the principle of the present disclosure.
FIG. 1 is a diagram for explaining by comparing V2X communication based on RAT before NR and V2X communication based on NR.
FIG. 2 illustrates the structure of an LTE system to which embodiment(s) are applicable.
FIG. 3 illustrates the structure of an NR system to which embodiment(s) are applicable.
FIG. 4 illustrates the structure of an NR radio frame to which embodiment(s) are applicable.
FIG. 5 illustrates the slot structure of an NR frame to which embodiment(s) are applicable.
FIG. 6 illustrates a radio protocol architecture for SL communication.
FIG. 7 illustrates UEs performing V2X or SL communication.
FIG. 8 illustrates resource units for V2X or SL communication.
FIG. 9 is a diagram for explaining an ITS station reference architecture.
FIG. 10 illustrates an exemplary structure of an ITS station that may be designed and applied based on a reference architecture.
FIGS. 11 and 12 are diagrams illustrating a method for measuring a location based on acoustic signals.
FIG. 13 is a diagram illustrating a UE that performs location measurement based on acoustic signals.
FIGS. 14 and 15 are diagrams illustrating a method for controlling an acoustic positioning-related operation of a UE by a server.
FIGS. 16 and 17 are diagrams illustrating a method for controlling an operation of a function/component related to acoustic positioning by a UE.
FIGS. 18 to 20 are diagrams illustrating a method for controlling an operations/function related to acoustic positioning of a UE by an anchor node.
FIGS. 21 to 23 are diagrams illustrating a method for activating a function/operation for acoustic positioning based on information of RSUInfo by a UE.
FIG. 24 is a diagram illustrating a method for performing location measurement based on acoustic signals by a device.
FIG. 25 is a diagram illustrating a method for receiving location information from a device by a network/server.
FIG. 26 is a diagram for explaining a method for a second VRU UE to receive a first signal.
FIG. 27 illustrates a communication system applied to the present disclosure.
FIG. 28 illustrates wireless devices applicable to the present disclosure.
FIG. 29 illustrates another example of a wireless device to which the present disclosure is applied.

### DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE. 3GPP NR (New Radio or New Radio Access Technology) is an evolved version of 3GPP LTE/LTE-A/LTE-A pro.

5G NR is a successor technology of LTE-A and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

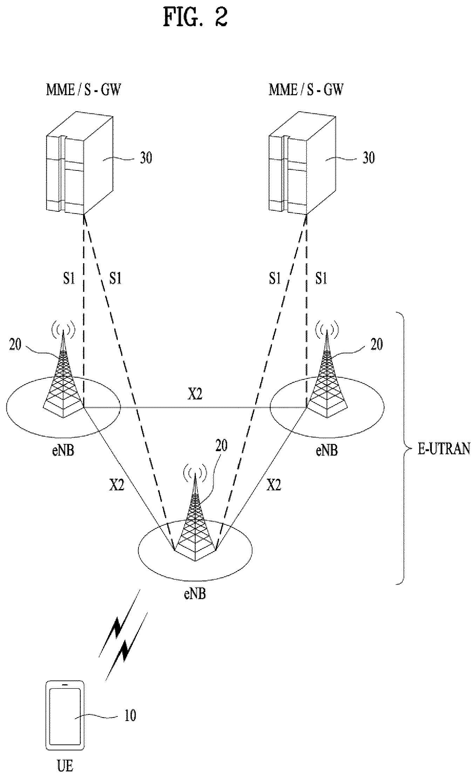

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile, and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

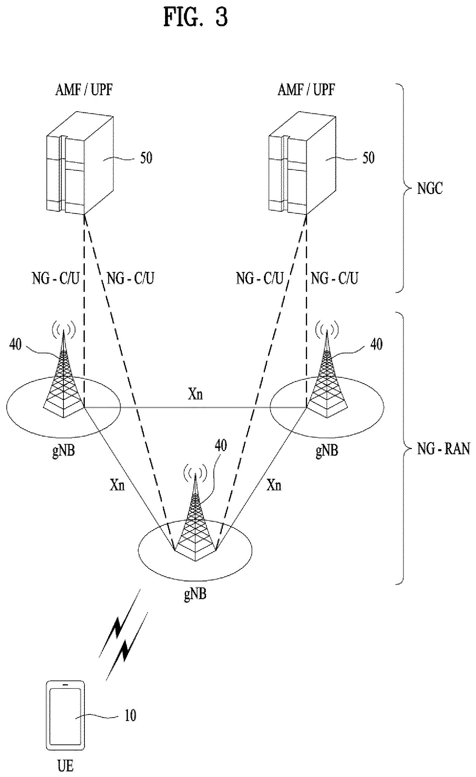

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

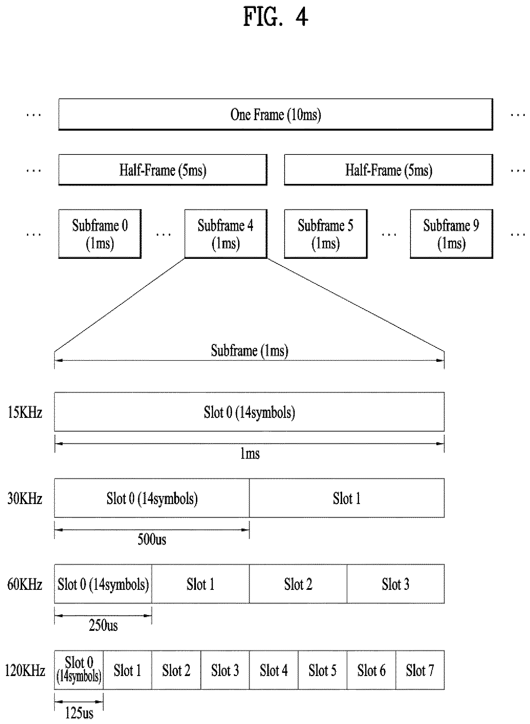

FIG. 4 illustrates the structure of a NR radio frame to which the present disclosure is applicable.

Referring to FIG. 4, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot N^{slot}_{symb}, the number of slots per frame N^{frame,u}ₛₗₒₜ, and the number of slots per subframe N^{subftame,u}ₛₗₒₜ according to an SCS configuration µ in the NCP case.

**[Table 1]**

| SCS (15*2u) | N^{slot}_{syrnb} | N^{frame,u}ₛₗₒₜ | N^{subframe,u}ₛₗₒₜ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

**[Table 2]**

| SCS (15*2^u) | Nslotsymb | Nframe,uslot | Nsubframe,uslot |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

**[Table 3]**

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

**[Table 4]**

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

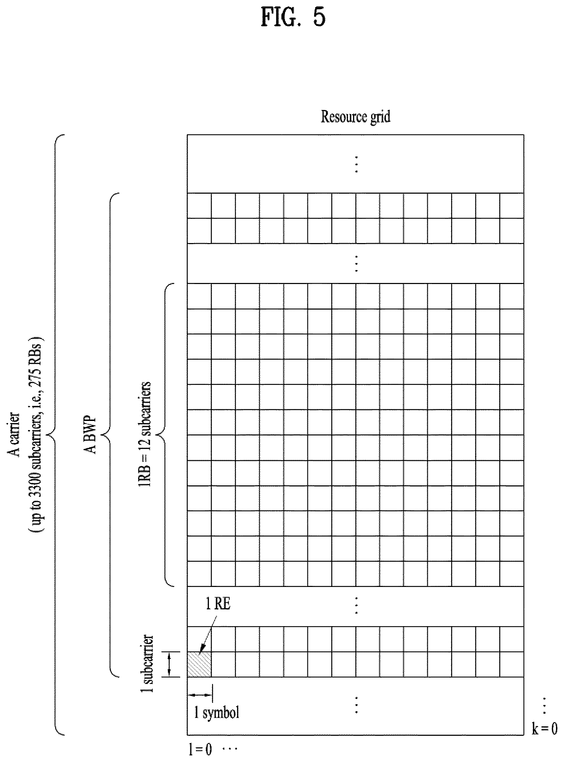

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

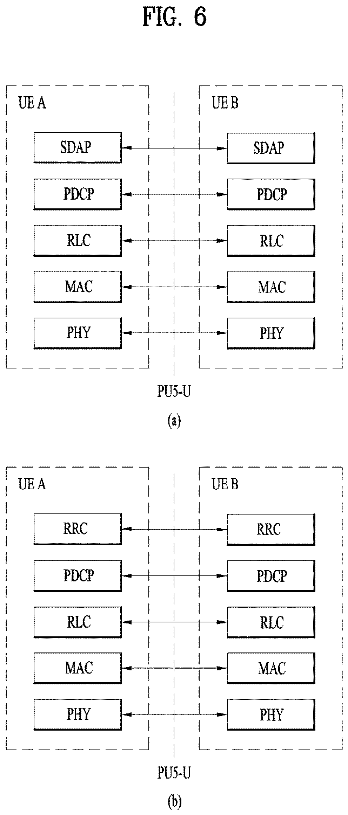

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

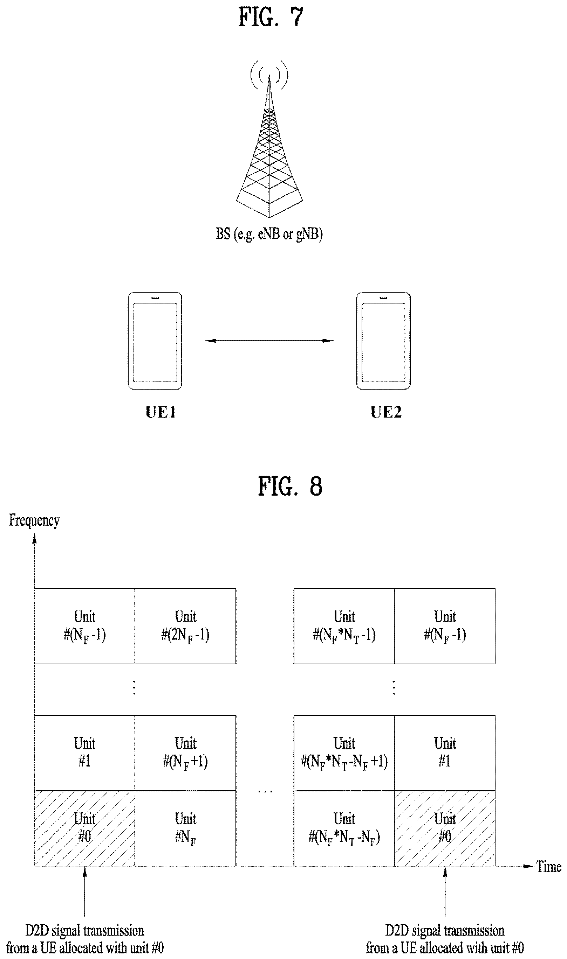

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool.

FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.

(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.

(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

### Vehicular Communications for ITS

An intelligent transport system (ITS) utilizing vehicle-to-everything (V2X) may mainly include an access layer, a network & transport layer, a facilities layer, an application layer, security and management entities, etc. Vehicle communication may be applied to various scenarios such as vehicle-to-vehicle communication (V2V), vehicle-to-network communication (V2N or N2V), vehicle-to-road side unit (RSU) communication (V2I or I2V), RSU-to-RSU communication (I2I), vehicle-to-pedestrian communication (V2P or P2V), and RSU-to-pedestrian communication (I2P or P2I). A vehicle, a BS, an RSU, a pedestrian, etc. as the subjects of vehicle communication are referred to as ITS stations.

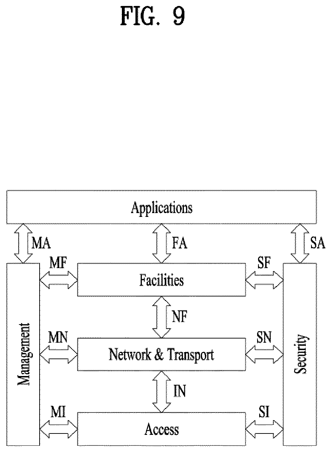

FIG. 9 is a diagram for explaining an ITS station reference architecture.

The ITS station reference architecture may include an access layer, a network & transport layer, a facilities layer, entities for security and management, and an application layer at the top. Basically, the ITS station reference architecture follows a layered OSI model.

Specifically, features of the ITS station reference architecture based on the OSI model are illustrated in FIG. 9. The access layer of the ITS station corresponds to OSI layer 1 (physical layer) and layer 2 (data link layer), the network & transport layer of the ITS station corresponds to OSI layer 3 (network layer) and layer 4 (transport layer), and the facilities layer of the ITS station corresponds to OSI layer 5 (session layer), layer 6 (presentation layer), and layer 7 (application layer).

The application layer, which is located at the highest layer of the ITS station, may actually implement and support a use-case and may be selectively used according to the use-case. The management entity serves to manage all layers in addition to managing communication and operations of the ITS station. The security entity provides security services for all layers. Each layer of the ITS station exchanges data transmitted or received through vehicle communication and additional information for various purposes through an interface. The abbreviations of various interfaces are described below.
MA: Interface between management entity and application layer
MF: Interface between management entity and facilities layer
MN: Interface between management entity and networking & transport layer
MI: Interface between management entity and access layer
FA: Interface between facilities layer and ITS-S applications
NF: Interface between networking & transport layer and facilities layer
IN: Interface between access layer and networking & transport layer
SA: Interface between security entity and ITS-S applications
SF: Interface between security entity and facilities layer
SN: Interface between security entity and networking & transport layer
SI: Interface between security entity and access layer

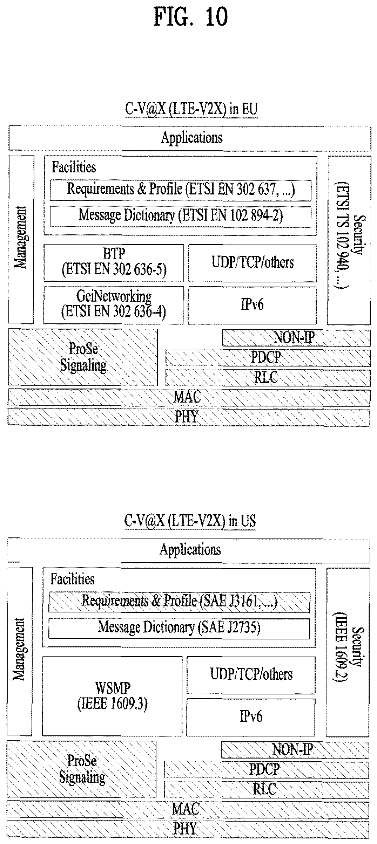

FIG. 10 illustrates an exemplary structure of an ITS station that may be designed and applied based on a reference architecture.

A main concept of the ITS station reference architecture is to allow each layer with a special function to process communication on a layer basis, between two end vehicles/users included in a communication network. That is, when a V2V message is generated, the data is passed through each layer downwards layer by layer in the vehicle and the ITS system (or other ITS-related UEs/systems), and a vehicle or ITS system (or other ITS-related UEs/systems) receiving the message passes the message upwards layer by layer.

The ITS system operating through vehicle communication and the network was organically designed in consideration of various access technologies, network protocols, communication interfaces, etc. to support various use-cases, and the roles and functions of each layer described below may be changed depending on a situation. The main functions of each layer will be briefly described.

The application later actually implements and supports various use-cases. For example, the application layer provides security, efficient traffic information, and other entertainment information.

The application layer controls an ITS station to which an application belongs in various manners or provides services by transferring a service message to an end vehicle/user/infrastructure through the access layer, the network & transport layer, and the facilities layer, which are lower layers of the application layer, by vehicle communication. In this case, the ITS application may support various use-cases. In general, these use-cases may be supported by grouping into other applications such as road-safety, traffic efficiency, local services, and infotainment. Application classification, use-cases, etc. may be updated when a new application scenario is defined. Layer management serves to manage and service information related to operation and security of the application layer, and the related information is transmitted and shared bidirectionally through an MA and an SA (or service access point (SAP), e.g. MA-SAP or SA-SAP). A request from the application layer to the facilities layer or a service message and related information from the facilities layer to the application layer may be delivered through an FA.

The facilities layer serves to support effective implementation of various use-cases defined in an application layer of a higher layer. For example, the facilities layer may perform application support, information support, and session/communication support.

The facilities layer basically supports the 3 higher layers of the OSI model, for example, a session layer, a presentation layer, and the application layer, and functions. Specifically, the facilities layer provides facilities such as application support, information support, and session/communication support, for the ITS. Here, the facilities mean components that provide functionality, information, and data.

The application support facilities support the operation of ITS applications (mainly generation of a message for the ITS, transmission and reception of the message to and from a lower layer, and management of the message). The application support facilities include a cooperative awareness (CA) basic service and a decentralized environmental notification (DEN) basic service. In the future, facilities entities for new services such as cooperative adaptive cruise control (CACC), platooning, a vulnerable roadside user (VRU), and a collective perception service (CPS), and related messages may be additionally defined.

The information support facilities provide common data information or a database to be used by various ITS applications and includes a local dynamic map (LDM).

The session/communication support facilities provide services for communications and session management and include an addressing mode and session support.

Facilities may be divided into common facilities and domain facilities.

The common facilities are facilities that provide common services or functions required for various ITS applications and ITS station operations, such as time management, position management, and service management.

The domain facilities are facilities that provide special services or functions required only for some (one or more) ITS applications, such as a DEN basic service for road hazard warning applications (RHW). The domain facilities are optional functions and are not used unless supported by the ITS station.

Layer management serves to manage and service information related to the operation and security of the facilities layer, and the related information is transmitted and shared bidirectionally through an MF and an SF (or MF-SAP and SF-SAP). The transfer of service messages and related information from the application layer to the facilities layer or from the facilities layer to the application layer is performed through an FA (or FA-SAP), and bidirectional service messages and related information between the facilities layer and the lower networking & transport layer are transmitted by an NF (or NF-SAP).

The network & transport layer servers to configure a network for vehicle communication between homogenous or heterogeneous networks through support of various transport protocols and network protocols. For example, the network & transport layer may provide Internet access, routing, and vehicle networking using Internet protocols such as TCP/UDP+IPv6 and form a vehicle network using a basic transport protocol (BTP) and GeoNetworking-based protocols. In this case, networking using geographic position information may also be supported. A vehicle network layer may be designed or configured depending on technology used for the access layer (access layer technology-independently) or regardless of the technology used for the access layer (access layer technology-independently or access layer technology agnostically).

Functionalities of the European ITS network & transport layer are as follows. Basically, functionalities of the ITS network & transport layer are similar to or identical to those of OSI layer 3 (network layer) and layer 4 (transport layer) and have the following characteristics.

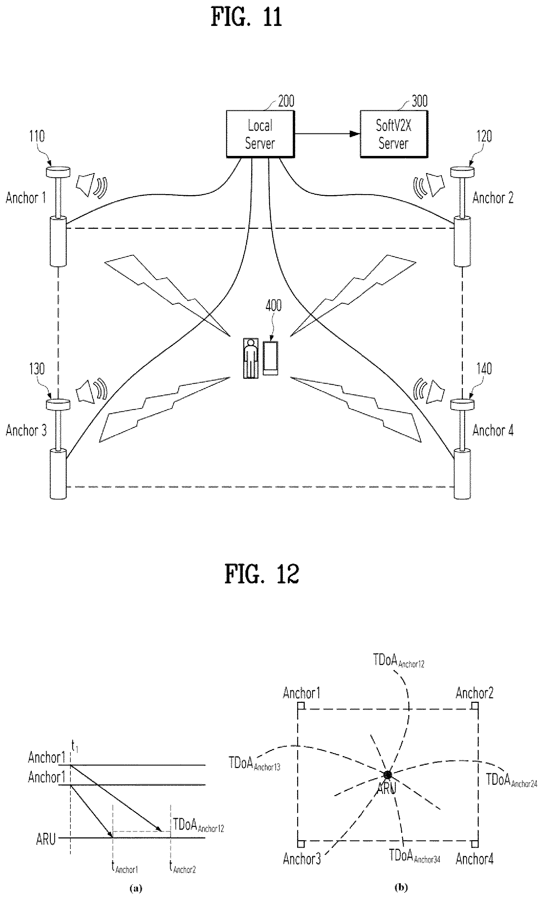

The transport layer is a connection layer that delivers service messages and related information received from higher layers (the session layer, the presentation layer, and the application layer) and lower layers (the network layer, the data link layer, and the physical layer). The transport layer serves to manage data transmitted by an application of the ITS station so that the data accurately arrives at an application process of the ITS station as a destination. Transport protocols that may be considered in European ITS include, for example, TCP and UDP used as legacy Internet protocols as illustrated in FIG.11, and there are transport protocols only for the ITS, such as the BTS.

The network layer serves to determine a logical address and a packet forwarding method/path, and add information such as the logical address of a destination and the forwarding path/method to a header of the network layer in a packet received from the transport layer. As an example of the packet method, unicast, broadcast, and multicast between ITS stations may be considered. Various networking protocols for the ITS may be considered, such as GeoNetworking, IPv6 networking with mobility support, and IPv6 over GeoNetworking. In addition to simple packet transmission, the GeoNetworking protocol may apply various forwarding paths or transmission ranges, such as forwarding using position information about stations including vehicles or forwarding using the number of forwarding hops.

Layer management related to the network & transport layer serves to manage and provide information related to the operation and security of the network & transport layer, and the related information is transmitted and shared bidirectionally through an MN (or MN-SAP) and an SN (or SN-SAP). Transmission of bidirectional service messages and related information between the facilities layer and the networking & transport layer is performed by an NF (or NF-SAP), and service messages and related information between the networking & transport layer and the access layer are exchanged by an IN (or IN-SAP).

A North American ITS network & transport layer supports IPv6 and TCP/UDP to support existing IP data like Europe, and a wave short message protocol (WSMP) is defined as a protocol only for the ITS.

A packet structure of a wave short message (WSM) generated according to the WSMP includes a WSMP header and WSM data carrying a message. The WSMP header includes Version, PSID, WSMP header extension fields, WSM WAVE element ID, and Length.

Version is defined by a WsmpVersion field indicating an actual WSMP version of 4 bits and a reserved field of 4 bits. PSID is a provider service identifier, which is allocated according to an application in a higher layer and helps a receiver to determine an appropriate higher layer. Extension fields is a field for extending the WSMP header, and includes information such as a channel number, a data rate, and transmit power used. WSMP WAVE element ID specifies the type of a WSM to be transmitted. Length specifies the length of transmitted WSM data in octets through a WSMLength field of 12 bits, and the remaining 4 bits are reserved. LLC Header allows IP data and WSMP data to be transmitted separately and is distinguished by Ethertype of a SNAP. The structures of the LLC header and the SNAP header are defined in IEEE802.2. When IP data is transmitted, Ethertype is set to 0x86DD in the LLC header. When WSMP is transmitted, Ethertype is set to 0x88DC in the LLC header. The receiver identifies Ethertype. If Ethertype is 0x86DD, the receiver transmits upward the packet to an IP data path, and if Ethertype is 0x88DC, the receiver transmits upward the packet to a WSMP path.

The access layer serves to transmit a message or data received from a higher layer on a physical channel. As access layer technologies, ITS-G5 vehicle communication technology based on IEEE 802.11p, satellite/broadband wireless mobile communication technology, 2G/3G/4G (long-term evolution (LTE), etc.)/5G wireless cellular communication technology, cellular-V2X vehicle-dedicated communication technologies such as LTE-V2X and NR-V2X (new radio), broadband terrestrial digital broadcasting technology such as DVB-T/T2/ATSC3.0, and GPS technology may be applied.

A data link layer is a layer that converts a physical line between adjacent nodes (or between vehicles) with noise into a communication channel without transmission error, for use in the higher network layer. The data link layer performs a function of transmitting/delivering/forwarding L3 protocols, a framing function of dividing data to be transmitted into packets (or frames) as transmission units and grouping the packets, a flow control function of compensating for a speed difference between a transmitter and a receiver, and a function of (because there is a high probability that an error and noise occurs randomly in view of the nature of a physical transmission medium) detecting a transmission error and correcting the error or detecting a transmission error based on a timer and an ACK signal by a transmitter in a method such as automatic repeat request (ACK) and retransmitting a packet that has not been correctly received. In addition, to avoid confusion between packets or ACK signals, the data link layer performs a function of assigning a sequence number to the packets and the ACK signals, and a function of controlling establishment, maintenance, and disconnection of a data link between network entities, and data transmission between network entities. The main functions of logical link control (LLC), radio resource control (RRC), packet data convergence protocol (PDCP), radio link control (RLC), medium access control (MAC), and multi-channel operation (MCO) included in the data link layer of FIG. 11 will be described below.

An LLC sub-layer enables the use of different lower MAC sub-layer protocols, and thus enables communication regardless of network topology. An RRC sub-layer performs functions such as broadcasting of cell system information required for all UEs within a cell, management of delivery of paging messages, management (setup/maintenance/release) of RRC connection between a UE and an E-UTRAN, mobility management (handover), transmission of UE context between eNodeBs during handover, UE measurement reporting and control therefor, UE capability management, temporary assignment of a cell ID to a UE, security management including key management, and RRC message encryption. A PDCP sub-layer may performs functions such as IP packet header compression in a compression method such as robust header compression (ROHC), cyphering of a control message and user data, data integrity, and data loss prevention during handover. RLC sub-layer delivers a packet received from the higher PDCP layer in an allowed size of the MAC layer through packet segmentation/concatenation, increases data transmission reliability by transmission error and retransmission management, checks the order of received data, reorders data, and checks redundancy. A MAC sub-layer performs functions such as control of the occurrence of collision/contention between nodes for use of shared media among multiple nodes, matching a packet delivered from the higher layer to a physical layer frame format, assignment and identification of the address of the transmitter/receiver, detection of a carrier, collision detection, and detection of obstacles on the physical medium. An MCO sub-layer enables efficient provision of various services on a plurality of frequency channels. The main function of MCO sub-layer is to effectively distribute traffic load of a specific frequency channel to other channels to minimize collision/contention of communication information between vehicles in each frequency channel.

The physical layer is the lowest layer in the ITS layer architecture. The physical layer defines an interface between a node and a transmission medium and performs modulation, coding, and mapping of a transport channel to a physical channel, for bit transmission between data link layer entities and informs the MAC sub-layer of whether a wireless medium is busy or idle by carrier sensing or clear channel assessment (CCA).

A Soft V2X system may be a system in which a Soft V2X server receives a VRU message or a personal safety message (PSM) from a vulnerable road user (VRU) or a V2X vehicle and transfers information on a neighbor VRU or vehicle based on the VRU message or the PSM message or may analyze a road condition, etc. on which neighbor VRUs or vehicles move and may transmit a message informing a neighbor VRU or vehicle of a collision warning, etc. based on the analyzed information (e.g., through a downlink signal) via V2X communication using a UU interface. Here, the VRU message may be a message transmitted to the Soft V2X server through the UU interface, and may include mobility information about the VRU, such as a position, a movement direction, a movement path, and a speed of the VRU. That is, the Soft V2X system may use a method of receiving mobility information of VRUs and/or vehicles related to V2X communication through the UU interface and controlling a driving route or a VRU movement flow of the VRU, etc. based on the mobility information received by the Soft V2X server, such as a network. The Soft V2X system may be configured in relation to V2N communication.

User equipment or pedestrian equipment (VRU device) that is difficult to perform direct communication (PC5, DSRC) related to V2X communication can provide or receive driving information and mobility information to nearby vehicles or VRUs through the Soft V2X system based on the UU interface. Through this, the user equipment or pedestrian equipment (VRU device) that is difficult to perform the direct communication (PC5, DSRC) can be protected from surrounding vehicles.

### Acoustic Positioning Algorithm Activation Control Technology

Conventionally, many V2X devices have recognized their own locations using GPS. However, the GPS-based positioning technology is based on the premise of reception of signals transmitted from satellites, which may degrade performance depending on situations such as the weather and overpasses. In particular, the problem of GPS performance degradation needs to be solved in specific areas such as school zones and crosswalks. To this end, an acoustic positioning method needs to be additionally provided to the specific areas.

FIGS. 11 and 12 are diagrams illustrating a method for measuring a location based on acoustic signals.

Referring to FIG. 11, RSUs/anchor nodes 110, 120, 130, and 140 that generate acoustic signals for acoustic positioning through speaker units may be installed at the corners of a specific area (or acoustic positioning area). The RSUs 110, 120, 130, and 140 may generate and transmit synchronized acoustic signals received from a local server 220. A SoftV2X device 400 of a VRU may perform relative positioning with each of the RSUs 110, 120, 130, and 140 based on the acoustic signals, and estimate its own absolute location based on positioning parameters received from the SoftV2X server 300 and the absolute locations of the RSUs 110, 120, 130, and 140.

The local server 200 may transmit the synchronized acoustic signals through the RSUs 110, 120, 130, and 140 to the SoftV2X device or UE 400 of the surrounding VRU.

Referring to FIG. 12(a), anchor 1 (or RSU 1) and anchor 2 may simultaneously generate/transmit acoustic signals at a first time t1. In this case, the UE or VRU 400 may receive the acoustic signals from anchor 1 and anchor 2 and calculate the difference between reception times of the acoustic signals. Thereafter, the UE or VRU 400 may calculate/estimate its location based on the difference between reception times of acoustic signals from two anchors among anchor 1 to anchor 4, as illustrated in FIG. 12(b). This may be similar to the afore-described TDoA method. For such location measurement, the location of each anchor needs to be transmitted to the UE or VRU 400.

In the case of a battery-operated UE, it needs to efficiently perform location measurement based on acoustic signals in a specific area in order to optimize battery consumption. A method for effectively performing acoustic positioning by a UE/device will be described below in detail.

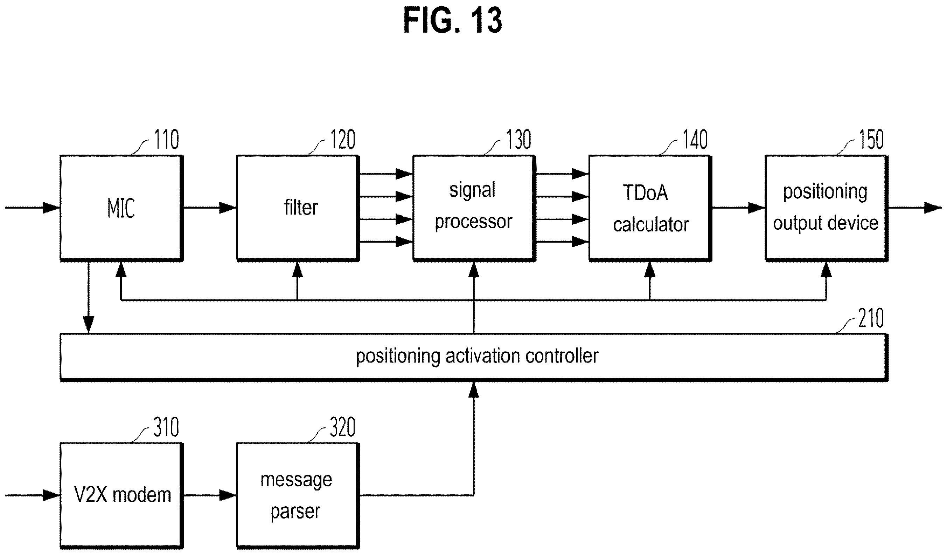

FIG. 13 is a diagram illustrating a UE that performs location measurement based on acoustic signals.

Referring to FIG. 13, the UE/device may include a MIC 110, a filter 120, a signal processor 130, a TDoA calculator 140, a positioning output device 150, a positioning activation controller 210, a V2X modem 310, and a message parser 320. The MIC 110 may receive an acoustic signal for location measurement, and the filter 120 may extract some acoustic band from the received acoustic signal. The signal processor 130 may identify an acoustic signal received from each of at least two anchors, and calculate/obtain the reception time of the (initial) acoustic signal of each anchor. The TDoA calculator 140 may calculate the difference between reception times of the (initial) acoustic signals of the anchors, and measure/determine the location of the UE based on the calculated reception time difference and/or the absolute locations of the anchors. The positioning output device 150 may calculate and output a location correction, a velocity, and an acceleration based on the measured/determined location of the UE.

Modes/operations related to location measurement based on acoustic signals (hereinafter, acoustic positioning) may be controlled based on three methods (first method, second method, and third method) as described below.

The first method (or first activation type) may be a method in which a SoftV2X server (hereinafter, server) controls an acoustic positioning-related operation of a UE. In the first method, when the server manages zones based on a topic, the server may preconfigure a specific area (or an area of a system) for acoustic positioning for the UE. The second method (or second activation type) may be a method in which the UE directly controls an acoustic positioning-related operation. In the second method, the UE may receive acoustic positioning zone information for all acoustic positioning zones in which positioning is possible. In this case, when the UE receives an acoustic signal equal to or greater than a specific threshold or enters an acoustic positioning-related service area based on the acoustic positioning zone information, the UE may operate a component/module related to acoustic positioning. The third method (or third activation type) may be a method in which an anchor node controls an acoustic positioning operation of the UE. For example, in the third method, the anchor node may control the acoustic positioning operation of the UE by transmitting a specific signal (e.g., activation signal).

A method for controlling an acoustic positioning-related operation based on the first method will be described below in detail.

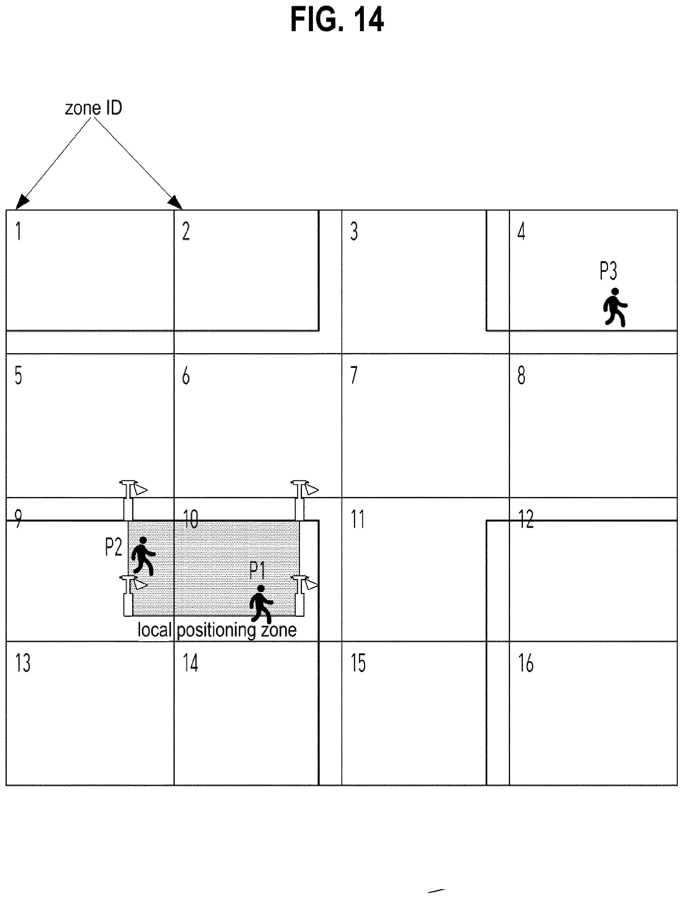

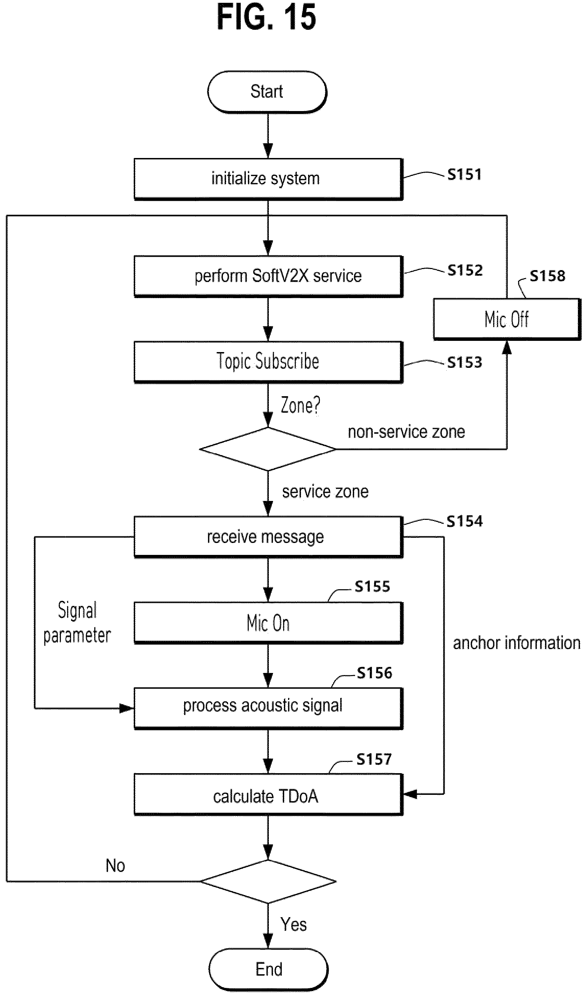

FIGS. 14 and 15 are diagrams illustrating a method for controlling an acoustic positioning-related operation of a UE by a server.

In a SoftV2X system, a server may manage zone-specific UE lists for transmitting and receiving messages based on a message queuing telemetry transport (MQTT) protocol. When acoustic positioning is supported in a specific area/specific zone, the server may transmit a zone ID of the specific zone to the UE based on the above method of managing zone-specific UE lists.

Specifically, referring to FIG. 14, acoustic positioning may be supported in zone 9 and zone 10. In this case, the server may inform the UE that zone 9 and zone 10 are zones in which acoustic positioning is possible. Thereafter, when the UE enters zone 9 or zone 10, the UE may perform an acoustic positioning-related operation by operating components for acoustic positioning. Alternatively, when the UE leaves zone 9 or zone 10, the UE may discontinue operating the components for acoustic positioning to prevent unnecessary power consumption of a battery included in the UE. In this method (i.e., first method), the UE does not need to directly identify/detect an area related to acoustic positioning, and the server may be responsible for directly informing the UE of the area related to acoustic positioning. In this case, the UE may be significantly relieved of the burden of detecting an area related to acoustic positioning, and a change in the area/zone related to acoustic positioning may be rapidly applied to the UE. For example, a second device P2 and a first device P1 may activate acoustic sensors and perform acoustic positioning because they are located in zone 9 and zone 10, whereas the acoustic sensor of a third device P3 may be in a deactivated state because the third device P3 is located in zone 4, which is not indicated by the server.

Referring to FIG. 15, when a system starts, the UE may initialize the system (S151) and perform a SoftV2X-related service (S152). The UE may continuously measure its own location while moving to identify a zone corresponding to its location, and subscribe to a topic according to the MQTT protocol based on the identified zone (S153). In this case, the UE may receive a message including information about whether a zone corresponding to the topic supports an acoustic positioning service (or local positioning service) according to the subscription to the topic (S154). When the message indicates that the zone supports the acoustic positioning service, the UE may receive an assistance message including configuration/assistance information related to positioning from the server, and start (or activate) the operation of a function/component (e.g., MIC) related to acoustic positioning based on the assistance message (S155). The UE may receive/process acoustic signals for acoustic positioning from the surroundings (S156), and measure the location of the UE based on the difference (TDoA) between reception times of acoustic signals from anchors based on the acoustic signals (S157). Alternatively, when the message indicates that the zone does not support the acoustic positioning service, the UE may maintain the function/component related to acoustic positioning in an off state/deactivated state to minimize unnecessary battery consumption (S158).

Hereinafter, a method for actively controlling an operation of a function/component related to acoustic positioning by a UE according to the second method described above will be described in detail.

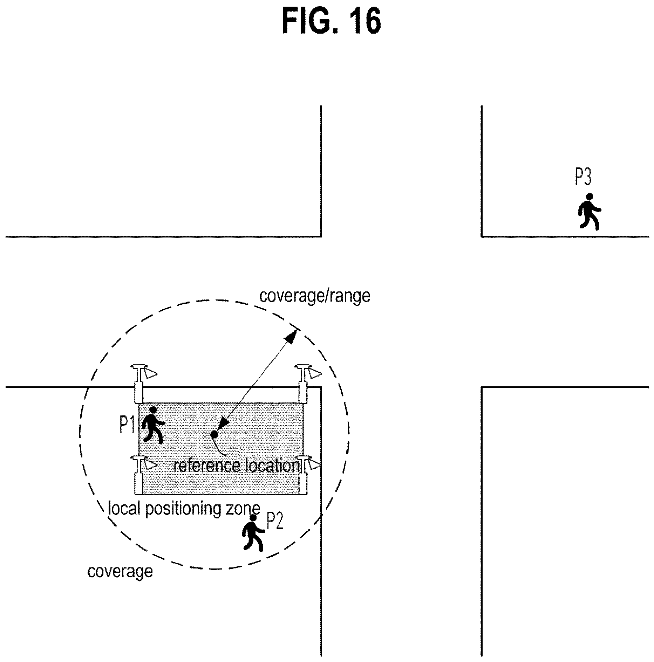

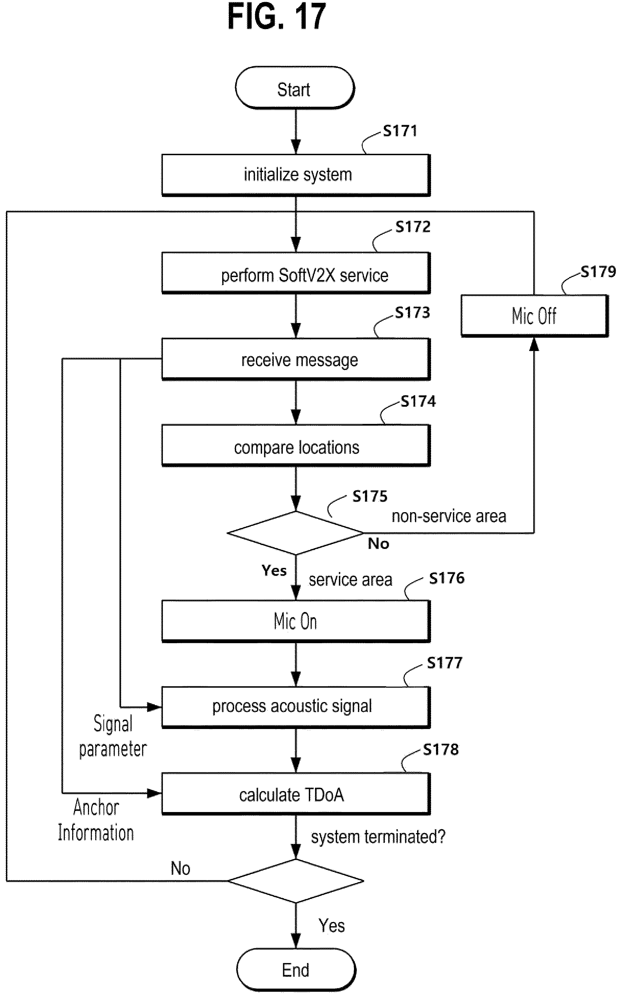

FIGS. 16 and 17 are diagrams illustrating a method for controlling an operation of a function/component related to acoustic positioning by a UE.

Referring to FIG. 16, the UE may receive acoustic positioning information/configuration information related to acoustic positioning at once from a server. The acoustic positioning information may include information about service areas related to acoustic positioning zones and/or information about anchors (absolute locations of the anchors) in each acoustic positioning zone. The service areas may be specified/determined based on specific reference locations and specific distances (or radiuses/coverage), and an acoustic positioning zone may be located within each service area, as illustrated in FIG. 16. When entering one of the service areas, the UE may turn on/activate the function/operation related to acoustic positioning based on the acoustic positioning information. Thereafter, when the UE enters an acoustic positioning zone located within the one service area, it may perform acoustic positioning based on received acoustic signals. Thereafter, when the UE leaves the service area, it may turn off the function/operation related to acoustic positioning, thereby minimizing unnecessary battery consumption. In this method, only when there is a change in an anchor or service area related to acoustic positioning, the server needs to provide information about the change to the UE, without the need for continuously managing acoustic positioning information related to acoustic positioning. For example, referring to FIG. 16, the first device P1 may activate the acoustic sensor and perform acoustic positioning, the second device P2 may activate the acoustic sensor but not perform acoustic positioning, and the third device P3 may have the acoustic sensor in the deactivated state.

Specifically, referring to FIG. 17, when a system starts, the UE may initialize the system (S171) and perform a SoftV2X service (S172). The UE may receive acoustic positioning information, which is parameters/configuration information of acoustic positioning systems, by a V2X message at once from a server in order to perform an acoustic positioning-related operation (S173). The acoustic positioning information may include information about a plurality of service areas (reference points/radiuses) and/or information about anchor nodes/RSUs in each service area, as described above. The UE may continuously compare its own location with the locations of the service areas to confirm/identify whether it has entered one of the plurality of service areas. When the UE has entered the service area (Yes in S175), the UE may turn on a function/operation related to acoustic positioning based on the configuration information included in the acoustic positioning information (S176). Thereafter, the UE may receive/process acoustic signals from a plurality of anchors based on signal parameters included in a received message when entering an acoustic positioning zone within the service area (S177), calculate a TDoA based on the processed acoustic signals (S178), and measure its own location based on the calculated TDoA and the absolute locations of the anchors. When the UE leaves the service area or is not located in the service area, it may turn off the function/component related to acoustic positioning, thereby minimizing unnecessary battery consumption (S179).

A method for controlling an operation/function related to acoustic positioning based on the third method by anchor nodes will be described below in detail.

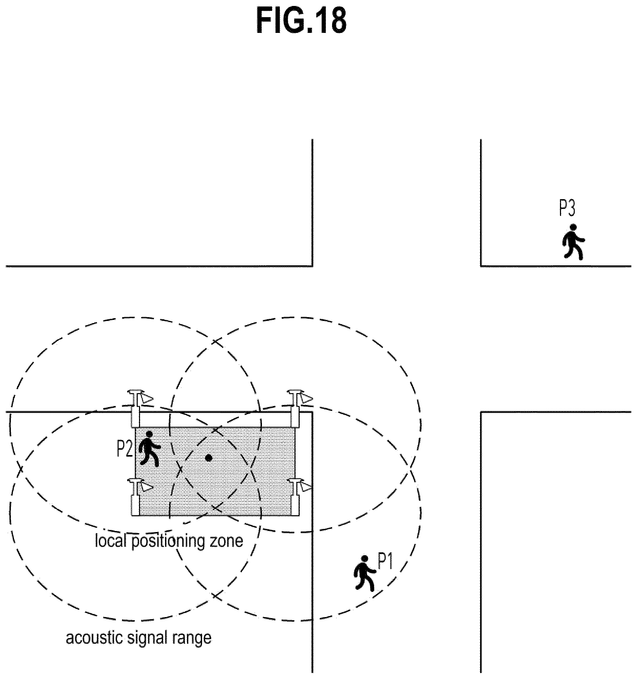

FIGS. 18 to 20 are diagrams illustrating a method for controlling an operation/function related to acoustic positioning of a UE by an anchor node.

Referring to FIG. 18, an anchor node/RSU may periodically transmit an activation signal to activate an operation/function for acoustic positioning of a UE. The activation signal may be an acoustic signal of a specific frequency or a wireless signal of a frequency band in which wireless communication is performed. When the UE/device receives the activation signal while maintaining the operation/function for acoustic positioning in a standby mode (or deactivation mode), it may switch to an acoustic positioning mode (activation mode) and activate the operation/function for acoustic positioning. For example, when the activation signal is received with a reception strength equal to or greater than a preset threshold, the UE may activate the operation/function for acoustic positioning. Thereafter, when the activation signal is received with a reception strength less than the preset threshold, the UE may deactivate the operation/function for acoustic positioning and switch to the standby mode to minimize battery consumption. For example, referring to FIG. 18, the first device P1 and the second device P2 may receive an activation signal equal to or greater than a specific threshold, and thus activate the acoustic sensors, whereas the third device P3 may not receive an activation signal equal to or greater than the specific threshold, and thus have the acoustic sensor in the deactivated state.

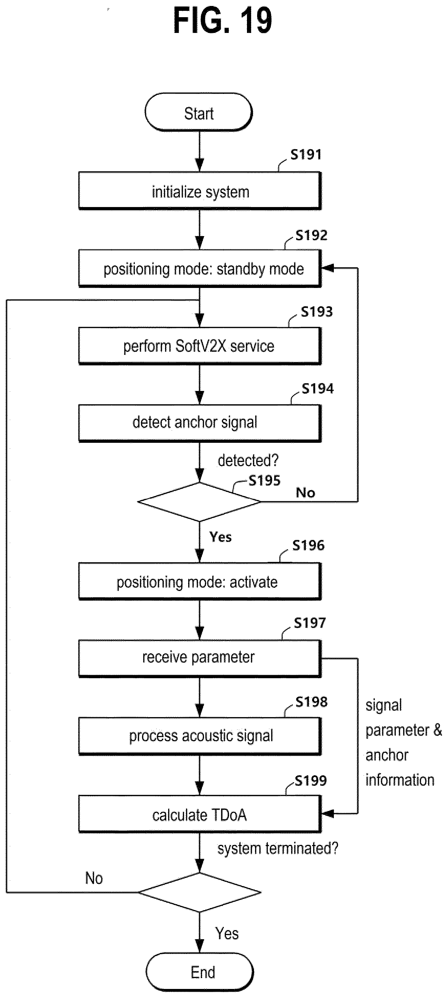

Referring to FIG. 19, when a system starts, the UE may initialize the system (S191). The UE may set a positioning mode related to acoustic positioning to the standby mode (i.e., deactivate an operation/function for acoustic positioning) (S192) and perform a SoftV2X service (S193). The UE may monitor whether an activation signal from an anchor node is detected (S194). The activation signal may be a signal/message transmitted in a frequency band for a wireless communication system or an acoustic signal, including information for activating the positioning mode. When the activation signal is detected (Yes in S195), the UE may switch the positioning mode to the activation mode (S196). The UE may receive a message including acoustic positioning information (i.e., parameters and anchor information) from a server or the anchor (S197), process the acoustic signal from the anchor based on acoustic positioning information (S198), and calculate a TDoA (S199). The UE may obtain its own location or location value based on the calculated TDoA. Thereafter, when the activation signal is received with a reception strength less than the specific threshold (No in S195), the UE may switch the positioning mode from the activation mode to the standby mode to minimize unnecessary battery consumption.

As such, the acoustic positioning algorithm and methods for deactivating/activating a function/component for acoustic positioning have been proposed to prevent unnecessary battery consumption of a UE capable of acoustic positioning. The above-described first method, second method, and third method may be used in combination. For example, when the UE in the standby mode is located around an acoustic positioning zone based on subscription to a topic, it may switch to the activation mode, and then when the strength of an acoustic signal (or activation signal) from an anchor is less than a specific threshold/specific level, switch back to the standby mode.

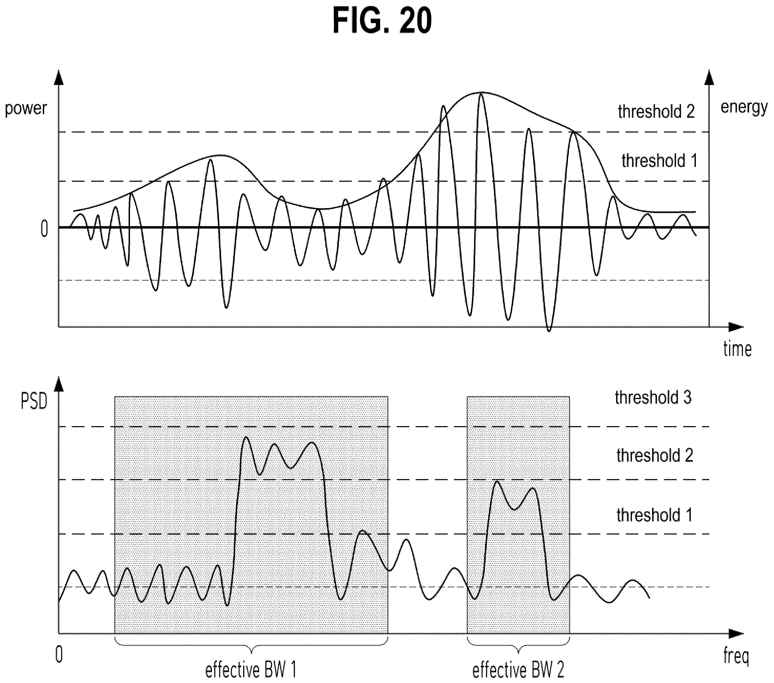

Alternatively, the UE may monitor whether an acoustic signal with a strength equal to or greater than the specific threshold/specific level is received from the anchor, and when an acoustic signal with a strength equal to or greater than the specific threshold is detected, activate the function/component for acoustic positioning. To this end, the UE may turn on the acoustic sensor (e.g., MIC) with a small period and detect an acoustic signal in the surroundings through the acoustic sensor. For example, referring to FIG. 20, the UE may detect an acoustic signal on the time/frequency axis using the acoustic sensor. Upon detection of an acoustic signal with a strength equal to or greater than the specific threshold (threshold 1, threshold 2, and/or threshold 3), the UE may activate the function/component for acoustic positioning.

The message including the acoustic positioning information may be defined as illustrated in Table 5 below. The message may include a parameter DF_PositioningZone to indicate a positioning zone. The parameter DF_PositioningZone may include information about the location of the zone, the number of RSUs (or the number of anchors), the interval/period of acoustic signals, Signal Type indicating the type of an acoustic signal, an acoustic positioning control method (ActivateMode), and information (e.g., ID and absolute location) about each RSU (or anchor). A method for activating an operation/component for acoustic positioning or an activation mode may be indicated to the UE by the acoustic positioning control method (ActivateMode).

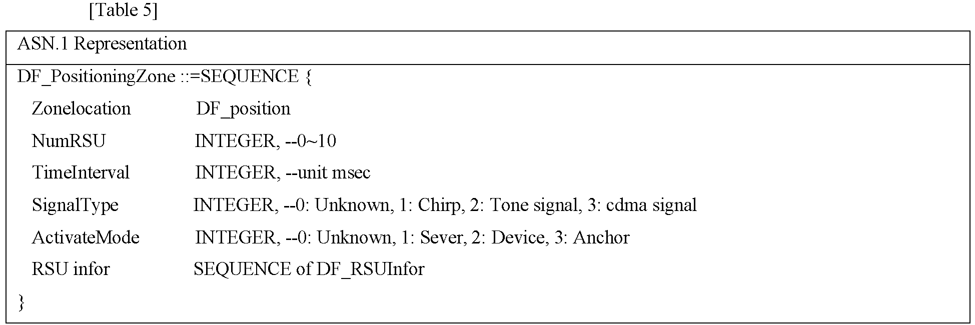

Specifically, information (RSUinfor) about each RSU (or anchor) may be defined as illustrated in Table 6 below. RSUinfor may further include parameters/information for Center_Position, Coverage, ZoneInfor, and ZoneLevel related to acoustic positioning (or activation of acoustic positioning) in addition to information about an RSU position, a frequency, and a time offset included in the existing RSU message. CenterPosition and Coverage may indicate the center position and coverage of a service area that provides the acoustic positioning service. In an acoustic positioning zone-based case, ZoneLevel may indicate whether or not an operation related to acoustic positioning is ready. For example, when the zone level is 0, the function/component for acoustic positioning may be activated only in a zone corresponding to a specified Zone ID, and when the zone level is 1, the function/component for acoustic positioning may be activated, when the UE enters/is located in a zone adjacent to the specified Zone ID.

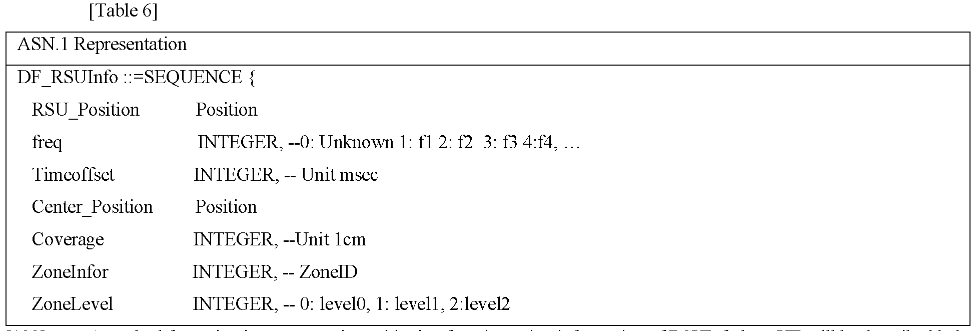

A method for activating an acoustic positioning function using mformation of RSUInfo by a UE will be described below on a mode basis.

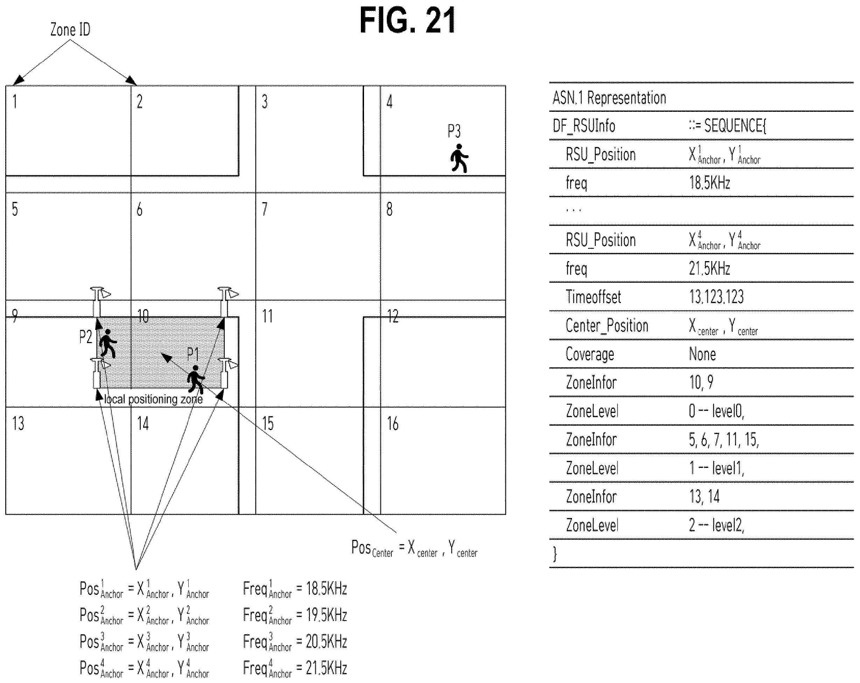

FIGS. 21 to 23 are diagrams illustrating a method for activating a function/operation for acoustic positioning based on information of RSUInfo by a UE.

Referring to FIG. 21, the UE may activate the function/operation for acoustic positioning based on DF_RSUInfo according to the first method described above. DF_RSUInfo may include information about the position of each RSU and frequency information. In the first method, since the server is responsible for controlling the function/operation for acoustic positioning of the UE, DF_RSUInfo may include information of ZoneInfor and zoneLevel without Coverage information. For example, referring to FIG. 21, DF_RSUInfo may include information of ZoneInfor 9 and 10 with zoneLevel 0, ZoneInfor 5, 6, 7, 11, and 15 with zoneLevel 1, and ZoneInfor 13 and 14 with zoneLevel 2.

As such, the server may set a zone ID and zone level related to acoustic positioning, and the UE may determine whether to activate the function/operation for acoustic positioning based on the set zone ID and zone level.

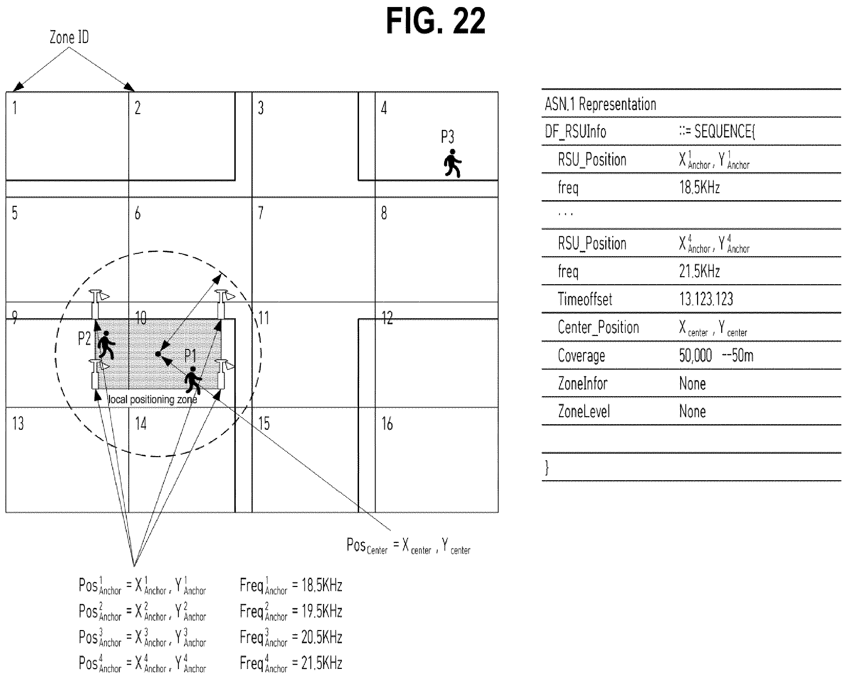

Referring to FIG. 22, according to the second method, the UE may determine whether to activate the function/operation for acoustic positioning. In this case, DF_RSUInfo may include location information and frequency information about each RSU. DF_RSUInfo may include information of Center Position and Coverage for determining a service area in which the function/operation for acoustic positioning is activated. Center Position and Coverage may be indicated in units of mm. Meanwhile, in the UE-based operation according to the second method, DF_RSUInfo does not include information of ZoneInfor and ZoneLevel.

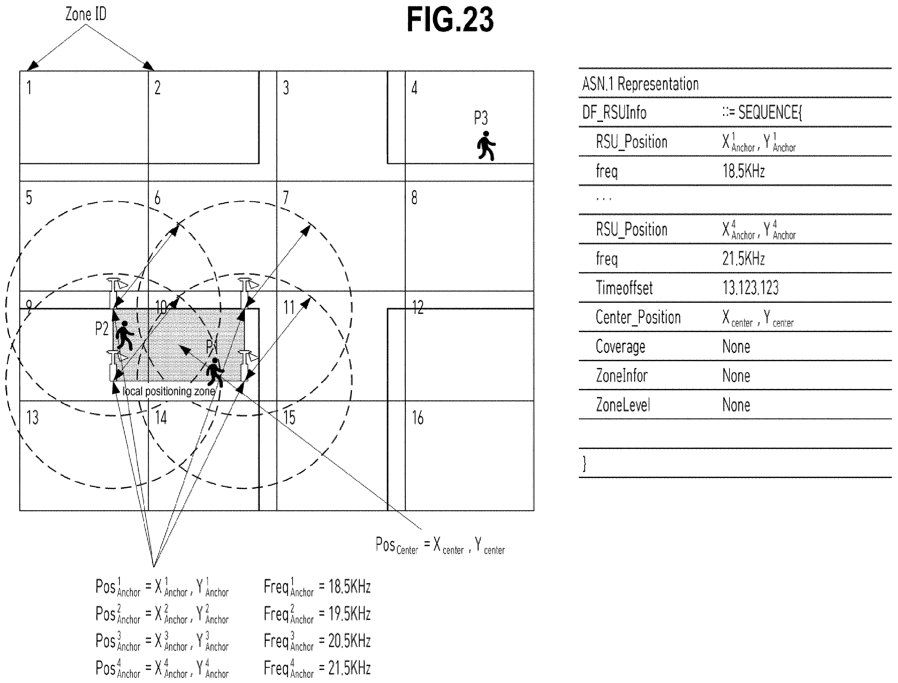

Referring to FIG. 23, according to the third method, the UE may determine whether to activate the function/operation for acoustic positioning. The UE may identify/recognize a signal transmission period of an RSU by identifying TimeInterval of PositionZone included in DF_RSUInfo. The UE may determine a reception time of an acoustic signal based on the signal transmission period, or determine a monitoring time or time interval of an activation signal. RSUinfor may not include information of Coverage, ZoneInfor, and ZoneLevel. For example, the RSU may periodically transmit/send an acoustic signal/activation signal based on TimeInterval. In this case, the UE may monitor whether the acoustic signal/activation signal is received/detected during a time interval of TimeInterval, and activate the function/operation for acoustic positioning, when the acoustic signal/activation signal is received with a reception strength equal to or greater than a specific threshold.

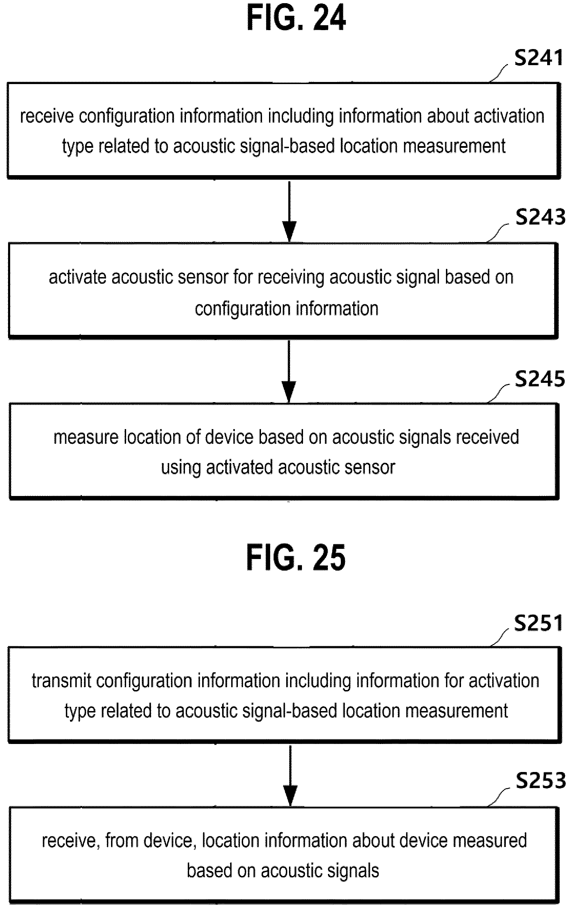

FIG. 24 is a diagram illustrating a method for performing location measurement based on an acoustic signal by a device.

Referring to FIG. 24, the device may receive configuration information including information about an activation type related to positioning based on an acoustic signal (S241). The activation type may be any one of a first measurement type, which is the above-described first method in which a network/server is responsible for controlling the activation of an acoustic sensor of a device, a second measurement type, which is a second method in which a device is responsible for the activation of an acoustic sensor, and a third measurement type, which is the third method in which an anchor (or RSU) is responsible for controlling the activation of an acoustic sensor of a device. In addition, the configuration information may include parameters for acoustic positioning, parameters related to the activation of the acoustic sensor, information about an anchor/RSU, and so on (see Tables 5 and 6). In addition, the configuration information may be transmitted from the network or server to the device, as described above. The acoustic signal may be an ultra-sonic signal having a frequency band equal to or higher than an audible frequency of a user/person.

Subsequently, the device may activate the acoustic sensor for receiving an acoustic signal based on the above-described configuration information (S243). As described above, the device may determine at least one parameter for determining the activation of the acoustic sensor according to the first activation type, the second activation type, or the third activation type. Meanwhile, the activation of the acoustic sensor may correspond to the activation of an acoustic positioning operation/configuration, as described above.

For example, when the configuration information indicates the first activation type or includes information about the first activation type, the device may determine whether to activate the acoustic sensor using a zone ID and a zone level among a plurality of parameters related to the activation of the acoustic sensor included in the configuration information. For example, the device may determine/specify at least one zone in which the acoustic sensor is activated based on the zone ID and the zone level, and activate the acoustic sensor when the device enters the at least one zone. When the zone level is a first level (or 0) the device may activate the acoustic sensor only when it enters a zone corresponding to the zone ID. Alternatively, when the zone level is a second level (or 1), the device may activate the acoustic sensor when entering one of the specific zone corresponding to the zone ID and zones adjacent to the specific zone. That is, the at least one zone in which the acoustic sensor is activated may be determined to include only the specific zone corresponding to the zone ID indicated based on the zone level, or to include the specific zone and the zones adjacent to the specific zone.

Alternatively, when the configuration information indicates the second activation type or includes information about the second activation type, the device may determine whether to activate the acoustic sensor by using a reference location and coverage (or radius) for specifying a service area among the plurality of parameters related to the activation of the acoustic sensor included in the configuration information. For example, the device may specify/determine the service area by using a parameter for the reference location and coverage among the plurality of parameters. In this case, the device may activate the acoustic sensor when entering the service area, and deactivate the acoustic sensor when not entering or leaving the service area.

Alternatively, when the configuration information indicates the third activation type or includes information about the third activation type, the device may determine whether to activate the acoustic sensor based on information about a transmission period of an anchor node (i.e., a node/RSU transmitting an acoustic signal) among the plurality of parameters related to the activation of the acoustic sensor included in the configuration information. For example, the device may obtain the transmission period of an anchor node related to its location from the configuration information, and determine a monitoring time interval of an activation signal related to the activation of the acoustic sensor based on the transmission period of the anchor node. The device may activate the acoustic sensor during the monitoring time interval, and when an activation signal equal to or greater than a specific threshold is received within the monitoring time interval, the device may maintain the acoustic sensor in an activated state without deactivating it, for acoustic positioning. In contrast, when an activation signal equal to or greater than the specific threshold is not received within the monitoring time period, the device may deactivate the acoustic sensor during the monitoring time interval. When the monitoring time interval elapses, the device may reactivate the acoustic sensor during the monitoring time interval.

Alternatively, as described above, the configuration information may indicate at least two activation types among the first activation type, the second activation type, and the third activation type. In this case, the device may determine whether to activate the acoustic sensor using parameters corresponding to each activation type among the plurality of parameters. For example, when the configuration information indicates the second activation type and the third activation type, the device may specify a service area based on coverage and a reference location among the plurality of parameters, and determine an activation maintenance time of the acoustic sensor based on the transmission period of the anchor node. In this case, when the device enters the service area, the acoustic sensor may be maintained in the activated state during a monitoring time interval determined based on the transmission period of the anchor node. When an activation signal equal to or greater than the specific threshold is received within the monitoring time interval, the acoustic sensor may be maintained in the activated state even after the monitoring time interval has elapsed. Alternatively, even if an activation signal equal to or greater than the specific threshold is received within the monitoring time interval, the device may deactivate the acoustic sensor when the device leaves the service area.

Alternatively, when the configuration information indicates the first activation type and the third activation type, the device may activate the acoustic sensor during the monitoring time interval determined based on the transmission period of the anchor node, when entering at least one zone specified based on the configuration information, and may determine whether to maintain the activated state based on whether an activation signal equal or greater than the specific threshold is received within the monitoring time interval.

Subsequently, the device may measure its own location based on acoustic signals received using the activated acoustic sensor (S245). For example, the device may calculate the difference between reception times of acoustic signals from at least two or more anchor nodes based on the acoustic signals received from the anchor nodes (TDoA), and measure the location based on the reception time difference and the absolute locations of the anchor nodes (pre-transmitted through the configuration information). Meanwhile, even if the acoustic sensor is in the activated state, only when the device is located within four anchor nodes (i.e., local positioning zone/local positioning area/acoustic positioning area) as described with reference to FIGS. 11 to 23, the device may perform positioning based on the acoustic signals.

FIG. 25 is a diagram illustrating a method for receiving location information from a device by a network/server.

Referring to FIG. 25, the network/server may transmit configuration information including information about an activation type related to positioning based on an acoustic signal to the device (S251). The network/server may determine the activation type of an acoustic sensor suitable for the device among the first to third activation types in consideration of a road condition related to the device, a range requiring accurate location measurement based on acoustic positioning, and a device density at a location where the device is located, and transmit the configuration information including information about the determined activation type. In addition, the configuration information may include parameters for acoustic positioning, parameters related to the activation of the acoustic sensor, and information about anchors/RSUs (see Table 5 and Table 6).

Subsequently, the network/server may receive, from the device, location information which the device has measured based on acoustic signals received using the activated acoustic sensor (S253). As described above, the location information may include information about the location of the device within four anchor nodes (i.e., a local positioning zone/local positioning area).

As described above, the network/server may specify at least one parameter related to the activation of the acoustic sensor of the device among the plurality of parameters included in the configuration information by indicating a specific activation type. In other words, the network/server may clearly indicate which parameter is necessary for the device to activate the acoustic sensor among the plurality of parameters through the indication of the activation type.

For example, when the configuration information indicates the first activation type or includes information about the first activation type, the network may expect that the device will use a zone ID and a zone level among the plurality of parameters related to the activation of the acoustic sensor included in the configuration information to determine whether to activate the acoustic sensor. When accurate location measurement based on acoustic positioning is necessary to protect the safety of the device based on a road condition where the device is located (i.e., when the device is located at an intersection or crosswalk), the network may set the zone level to the second level so that the device may perform accurate location measurement based on acoustic positioning at any time.

Alternatively, when the configuration information indicates the second activation type or includes information about the second activation type, the network may expect that the device will use a reference location and coverage (or radius) for specifying a service area among the plurality of parameters related to the activation of the acoustic sensor included in the configuration information to determine whether to activate the acoustic sensor. For example, the network may instruct the device to determine whether to activate the acoustic sensor based on the second activation type, when the device has a specific level of power or more, or when it is difficult for the network to actively control the activation of the acoustic sensor of the device due to a device density.

Alternatively, when the configuration information indicates the third activation type or includes information about the third activation type, the network may expect the device to determine whether to activate the acoustic sensor based on information about a transmission period of an anchor node (i.e., a node/RSU that transmits an acoustic signal) among the plurality of parameters related to the activation of the acoustic sensor included in the configuration information. For example, when there is an acoustic positioning area including RSUs/anchor nodes capable of transmitting activation signals around the device, the network may instruct the device to determine whether to activate the acoustic sensor based on the third activation type.

In this way, the network/server may define a plurality of activation types and efficiently indicate an appropriate activation method for the acoustic sensor to the device according to the situation of the acoustic positioning system. Alternatively, the device may minimize unnecessary power consumption caused by the acoustic positioning-related operation, such as the acoustic sensor, by determining whether to activate the acoustic sensor according to the indicated activation method.

### Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

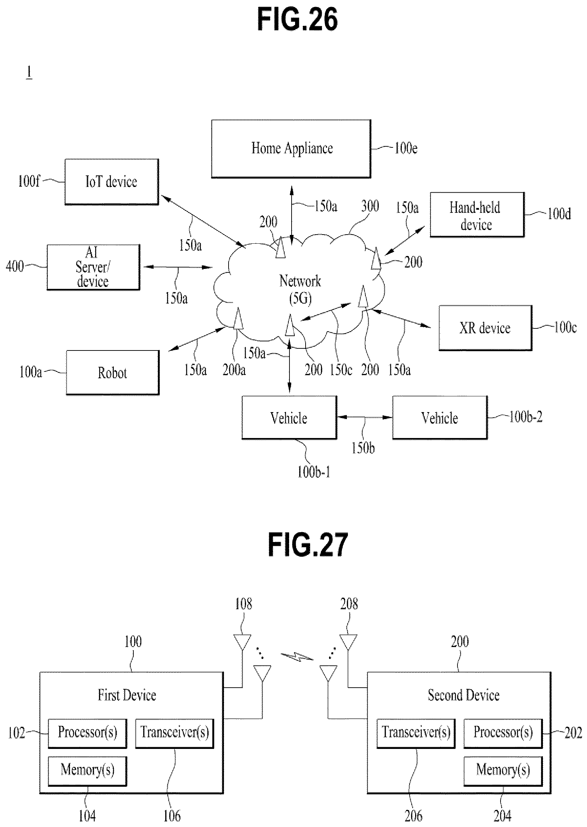

FIG. 26 illustrates a communication system applied to the present disclosure.

Referring to FIG. 26, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

### Examples of wireless devices to which the present disclosure is applied

FIG. 27 illustrates a wireless device applicable to the present disclosure.

Referring to FIG. 27, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 26.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, the first wireless device or first device 100 may include the processor 102 and the memory 104 which are connected to the transceiver 106. The memory 104 may include at least one program capable of performing an operation related to the embodiments described with reference to FIGS. 11 to 25.

The processor 102 may receive configuration information including information about an activation type related to acoustic signal-based location measurement by controlling the transceiver 106, activate an acoustic sensor for receiving an acoustic signal based on the configuration information, and measure a location based on the acoustic signal received by the acoustic sensor, and the acoustic sensor may be activated based on at least one parameter determined based on the activation type among a plurality of parameters included in the configuration information.

Alternatively, a processing device may be configured to control the first device including the processor 102 and the memory 104. The processing device may include at least one processor and at least one memory connected to the at least one processor and storing instructions that, based on being executed by the at least one processor, cause the device to receive configuration information including information about an activation type related to acoustic signal-based location measurement, activate an acoustic sensor for receiving an acoustic signal based on the configuration information, and measure a location based on the acoustic signal received by the acoustic sensor. The acoustic sensor may be activated based on at least one parameter determined based on the activation type among a plurality of parameters included in the configuration information.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

For example, the second wireless device or the network may control the transceiver 206 to transmit configuration information including information about an activation type related to location measurement based on an acoustic signal to a device and receive location information measured based on the configuration information from the device. The configuration information may include a plurality of parameters related to activation of an acoustic sensor of the device, and the measurement type may specify at least one parameter to be applied for activation of the acoustic sensor in the device among the plurality of parameters.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

### Examples of wireless devices to which the present disclosure is applied

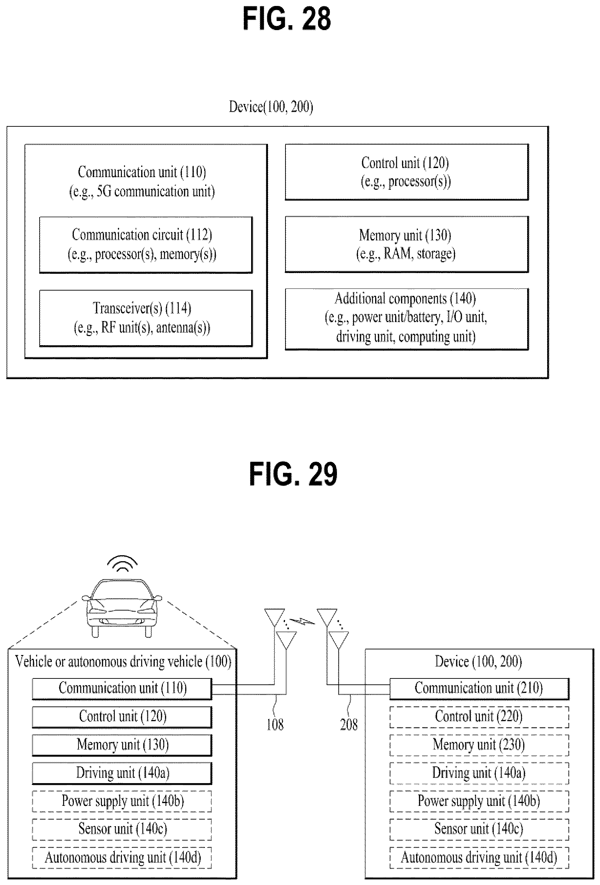

FIG. 28 illustrates another example of a wireless device applied to the present disclosure. The wireless device may be implemented in various forms according to a use-case/service (refer to FIG. 26)

Referring to FIG. 28, wireless devices 100 and 200 may correspond to the wireless devices 100 and 200 of FIG. 27 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 27. For example, the transceiver(s) 114 may include the one or more transceivers 106 and 206 and/or the one or more antennas 108 and 208 of FIG. 27. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 26), the vehicles (100b-1 and 100b-2 of FIG. 26), the XR device (100c of FIG. 26), the hand-held device (100d of FIG. 26), the home appliance (100e of FIG. 26), the IoT device (100f of FIG. 26), a digital broadcast terminal, a hologram device, a public safety device, an MTC device, a medicine device, a fintech device (or a finance device), a security device, a climate/environment device, the AI server/device (400 of FIG. 26), the BSs (200 of FIG. 26), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

### Examples of vehicles or autonomous vehicles to which the present disclosure is applied

FIG. 29 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 29, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 26, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultraacoustic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology and may be implemented in standards such as LTE Cat NB1 and/or LTE Cat NB2 and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication and is not limited to the above-described names. As an example, ZigBee technology can generate personal area networks (PANs) related to small/low-power digital communication based on various standards such as IEEE 802.15.4 and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the present disclosure should be determined by the appended claims and their legal equivalents, not by the above description, and all changes coming within the meaning and equivalency range of the appended claims are intended to be embraced therein.

### INDUSTRIAL APPLICABILITY

The above-described embodiments of the present disclosure are applicable to various mobile communication systems.

## Claims

1. A method for measuring a location by a device in a wireless communication system, the method comprising:
receiving configuration information including information for an activation type related to acoustic signal-based location measurement;
activating an acoustic sensor for receiving an acoustic signal based on the configuration information, and
measuring the location based on the acoustic signal received by the acoustic sensor,
wherein the acoustic sensor is activated based on at least one parameter determined based on the activation type among a plurality of parameters included in the configuration information.

2. The method of claim 1, wherein based on the configuration information indicating a first activation type, the device determines a zone identifier (ID) and a zone level as the at least one parameter among the plurality of parameters, and
wherein the acoustic sensor is activated based on the device entering at least one zone specified based on the zone ID and the zone level.

3. The method of claim 2, wherein based on the zone level being a first level, the at least one zone is specified as only a first zone corresponding to the zone ID, and
wherein based on the zone level being a second level, the at least one zone is specified to include the first zone corresponding to the zone ID and a second zone adjacent to the first zone.

4. The method of claim 1, wherein based on the configuration information indicating a second activation type, the device determines a reference location and coverage for specifying a service area as the at least one parameter among the plurality of parameters, and
wherein the acoustic sensor is activated based on the device entering the specified service area.

5. The method of claim 1, wherein based on the configuration information indicating a third activation type, the device determines a transmission period of an anchor node transmitting the acoustic signal as the at least one parameter among the plurality of parameters, and
wherein the acoustic sensor is activated during a monitoring time interval determined based on the transmission period.

6. The method of claim 5, wherein the acoustic sensor is deactivated based on not receiving an activation signal equal to or greater than a specific threshold within the monitoring time interval.

7. The method of claim 1, wherein based on the configuration information indicating a second activation type and a third activation type, the device determines a reference location and coverage for specifying a service area, and a transmission period of an anchor node, as the at least one parameter among the plurality of parameters.

8. The method of claim 7, wherein based on the device entering the service area, the acoustic sensor is activated during a monitoring time interval determined based on the transmission period.

9. A computer-readable recording medium storing a program for performing the method of claim 1.

10. A device for measuring a location in a wireless communication system, comprising:
a radio frequency (RF) transceiver;
an acoustic sensor; and
a processor connected to the RF transceiver,
wherein the processor receives configuration information including information about an activation type related to acoustic signal-based location measurement by controlling the RF transceiver, activates the acoustic sensor for receiving an acoustic signal based on the configuration information, and measures the location based on the acoustic signal received by the acoustic sensor, and
wherein the acoustic sensor is activated based on at least one parameter determined based on the activation type among a plurality of parameters included in the configuration information.

11. A processing device for controlling a device for measuring a location in a wireless communication system, the processing device comprising:
at least one processor; and
at least one memory connected to the at least one processor and storing instructions that, based on being executed by the at least one processor, cause the device to:
receive configuration information including information about an activation type related to acoustic signal-based location measurement;
activate an acoustic sensor for receiving an acoustic signal based on the configuration information; and
measure the location based on the acoustic signal received by the acoustic sensor,
wherein the acoustic sensor is activated based on at least one parameter determined based on the activation type among a plurality of parameters included in the configuration information.

12. A method for receiving location information from a device by a network in a wireless communication system, the method comprising:
transmitting configuration information including information about an activation type related to acoustic signal-based location measurement to the device; and
receiving the location information measured based on the configuration information from the device,
wherein the configuration information includes a plurality of parameters related to activation of an acoustic sensor of the device, and
wherein the activation type specifies at least one parameter to be applied for the activation of the acoustic sensor in the device among the plurality of parameters.

13. A computer-readable recording medium storing a program for performing the method of claim 12.

14. A network for receiving location information from a device in a wireless communication system, comprising:
a radio frequency (RF) transceiver; and
a processor connected to the RF transceiver,
wherein the processor transmits configuration information including information about an activation type related to acoustic signal-based location measurement to the device, and receives the location information measured based on the configuration information from the device, by controlling the RF transceiver,
wherein the configuration information includes a plurality of parameters related to activation of an acoustic sensor of the device, and
wherein the activation type specifies at least one parameter to be applied for the activation of the acoustic sensor in the device among the plurality of parameters.

15. A processing device for controlling a network for receiving location information from a device in a wireless communication system, the processing device comprising:
at least one processor; and
at least one memory connected to the at least one processor and storing instructions that, based on being executed by the at least one processor, cause the network to:
transmit configuration information including information about an activation type related to acoustic signal-based location measurement to the device; and
receive the location information measured based on the configuration information from the device,
wherein the configuration information includes a plurality of parameters related to activation of an acoustic sensor of the device, and
wherein the activation type specifies at least one parameter to be applied for the activation of the acoustic sensor in the device among the plurality of parameters.
